# EUROPEAN PATENT SPECIFICATION

(11) **EP 2 077 716 B1**
(45) Date of publication and mention of the grant of the patent: **20.03.2013**
(21) Application number: 07817845.6
(22) Date of filing: 19.10.2007
(51) Int. Cl.: E03F 7/06, A01M 27/00

(54) **A RAT TRAP**
RATTENFALLE
RATIÈRE

(30) Priority: 19.10.2006 DK 200601357; 26.02.2007 US 678687
(43) Date of publication of application: 15.07.2009
(60) Divisional application: 12186969.7
(73) Proprietor: Paf Holding APS, 3200 Helsinge (DK)
(72) Inventor: FRITZBØGER, Preben, 3200 Helsinge (DK)
(74) Representative: Zacco Denmark A/S
(86) International application number: PCT/DK2007/000449
(87) International publication number: WO 2008/046424

(56) References cited:
- EP-A- 1 400 172
- US-A- 3 217 445
- US-A- 4 653 221
- US-B1- 7 076 913

## Description

The invention relates to a rat trap comprising a plate with a first side and a second side and with a number of through-going openings from the first to the second side; a number of spikes secured to an anchoring plate, said anchoring being arranged on the first side of said plate and wherein each spike is adapted to the individual openings in the plate to the effect that a spike can be caused to slide through such opening from the first side of the plate to the second side of the plate; an energy supply; a release mechanism; a sensor adapted for detecting the presence of a rat within the range of the spikes on the second side of the plate; a firing mechanism capable of ejecting one or more of such spikes through the openings when the presence of a rat is detected by the sensor.

Rats in the sewage system are an ever increasing problem which entails considerable problems of a technical as well as a sanitary nature. For instance, rats may cause damage by perforating sewer pipes and building nests in the soil surrounding the pipes. Thereby the pipes may settle and become leaky, but they may also be clogged due to rats' nests literally blocking or the pipes may even collapse when the surrounding soil yields due to sometimes very large rats' nests. Thereby sewage water seeps out into the surroundings with ensuing increased risks of spread of diseases. Besides, the rats themselves spread diseases and since they are able to travel considerable distances they are, regrettably, a considerable source of disease spreading. It is therefore important - not only from a health point of view, but also from a financial point of view - to exterminate rats in general and including in the sewer system.

It has therefore been attempted to use both mechanical and chemical means to eliminate rats, but both methods are associated with deficiencies and weaknesses. For instance, rats adjust very easily which is also reflected in their unique ability to develop resistance to the poisons used, and therefore it has continuously been necessary to develop and use increasingly more aggressive poisons that are poisonous not only to humans, but also to many of our useful animals that are consequently unintentionally exposed to serious risk of poisoning.

The purely mechanical solutions such as eg snares or drop traps have been found to have weaknesses, rats being intelligent animals with high learning abilities. Precisely those properties mean that the rats are very conscious about eg a dead rat being a clear signal of danger and consequently they avoid, to a large extent, areas where there have been or still are dead animals in such mechanical traps. This pattern of behaviour thus entails problems in connection with the mechanical traps that consequently need careful emptying and/or frequent mowing since, as mentioned, the rats quickly avoid the surroundings where such traps occur.

Another rat killing device is known from EP 1400172 A. This device is installed around such as an open water channel and consists of a guillotine blade at the end of a pivot mounted arm. The arm is retained against a force provided by a torsion spring. When the rat trips the device the spring force is released.

By the invention it has surprisingly been found that it is possible, in an easy and efficient manner, to exterminate rats by means of a mechanical trap without said drawbacks, the rat trap being configured according to the characterising portion of independent claim 1.

By providing the rat trap with such withdrawal mechanism and moreover positioning the trap where the released rat can be flushed away by the sewage water, the killed rat will quickly disappear from the surroundings of the trap and thereby it is accomplished not only that the trap is fully automated, but also that the dead rat is no longer able to serve as warning signal to the other rats that a danger lurks in the vicinity of a the trap.

According to one embodiment the rat trap comprises electronic means for recording and storing information regarding operational parameters such as the number of firings or eg the battery state of the trap or its available memory. By configuring the rat trap with an electronic memory it is possible, at any time, to obtain a clear indication whether the trap is active and hence kills many rats or whether the trap is inactive. In particular information on inactivity may be a very useful indication that something is wrong and that consequently the mechanical state of the trap needs to be checked. It may also be that the trap is quite simply to be moved as the information indicates that rats do no appear in the vicinity of the trap.

According to one embodiment the spikes are withdrawn following a predetermined period of time, which is the time it is assumed to take for the rat to die.

According to one embodiment the trap comprises electronic means for wireless transmission of operational parameters to a receiver unit eg at ground level. By transferring operational parameters to ground level, the need to inspect or collect the unit manually is obviated, and consequently the need for sending crew into the sewage system is limited.

According to a further embodiment the trap comprises electronic means for transferring operational parameters to a network such as eg a mobile telephone network. Thereby the rat trap can be monitored from a distance or remote-operated, via eg the internet. By providing the trap with such means several traps can be monitored centrally, and therefore it is possible not only to save crew, but it is also an option to provide improved numerical processing of information such as eg current information on the amount of rats in given geographical zones. However, it is also an option to switch off the trap prior to inspection or mounting. Thereby it is also possible to avoid accidents in connection with unintentional firings during eg mounting or inspection. Also, it is possible to test the functionary of the trap by remote-firing it or even to completely switch off the trap if it malfunctions in one way or another.

The wireless communication as such via the mobile network can easily be established by means of eg a small antenna at ground level which is connected via a cable to the trap.

According to one embodiment the plate is constituted of a flexible tubular member adapted such that it is able to resiliently engage with a sewage pipe and, in a preferred embodiment, such resilient member is in the shape of a semi-cylindrical shield. This configuration of the plate enables the mechanical part of the trap to be arranged on the surface of the shield. Thereby a particularly advantageous embodiment is accomplished which is easily mounted in the pipes in a sewer shaft as the flexible part is merely to be inserted into resilient engagement with the inside of one of the pipes that extend into or out of the shaft.

According to one embodiment the withdrawal mechanism is constituted of an electromagnetic mechanism such as eg a solenoid or a coil. By configuring the withdrawal mechanism around a solenoid, a very quick mechanism is accomplished, meaning that the same mechanism can also be used to fire the spikes, too.

According to one embodiment, the withdrawal mechanism is constituted of a spindle mechanism adapted to withdraw the spikes. By configuring the withdrawal mechanism around a spindle solution, it is an option to use a motor with a relatively small moment of rotation and consequently it is also an option to also use the spindle mechanism to compress the springs in a firing mechanism.

According to one embodiment the trap comprises a light sensor communicating electronically with the firing mechanism to the effect that the firing mechanism is interrupted when light occurs that is above a given intensity. By providing the trap with means for switching off the firing mechanism when a light intensity above a given level occurs, it is possible to prevent accidents due to eg erroneous activation of the trap in case of ordinary localised work illumination, including eg also in daylight at ground level or in artificial work illumination at the bottom of a shaft. Such light-activated safety means may of course also be adapted to be such that they switch off the trap merely if a superposed well cover is opened in daylight.

According to one embodiment the rat trap comprises electronic means for transferring images to a network, eg a mobile telephone network. Thereby the rat trap can be remote-monitored visually via eg the internet and therefore it is also possible to perform a visual inspection of the technical functionality of the trap eg by enabling the trap to be remote-fired.

According to one embodiment the trap is provided with light and/or a camera for transferring images to a network such as eg a mobile telephone network to the effect that the trap can be remote-monitored via eg the internet. Thereby a further option of collecting information is provided.

Other embodiments are recited in the dependent claims.

### List of figures.

Now the invention will be described in further detail with point of departure in the figures; wherein
Figure 1 schematically shows the construction of an embodiment of the rat trap;
Figure 2. schematically shows two depictions of an embodiment of the rat trap with the spring mechanism more or less tightened;
Figure 3 schematically shows an embodiment of the rat trap;
Figure 4 shows an embodiment of the trap mounted in a sewer shaft;
Figure 5 shows a tool for mounting a rat trap in a sewer pipe.

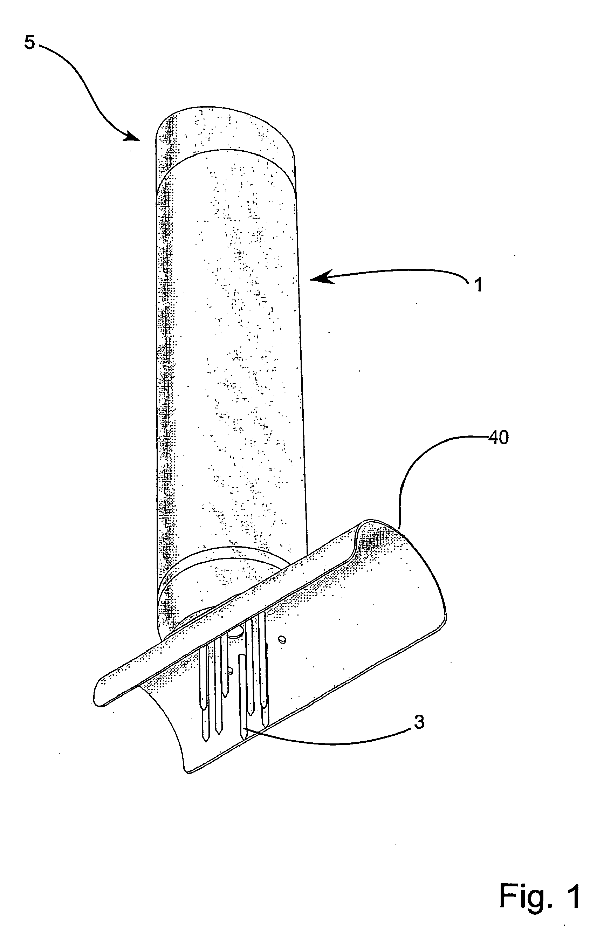

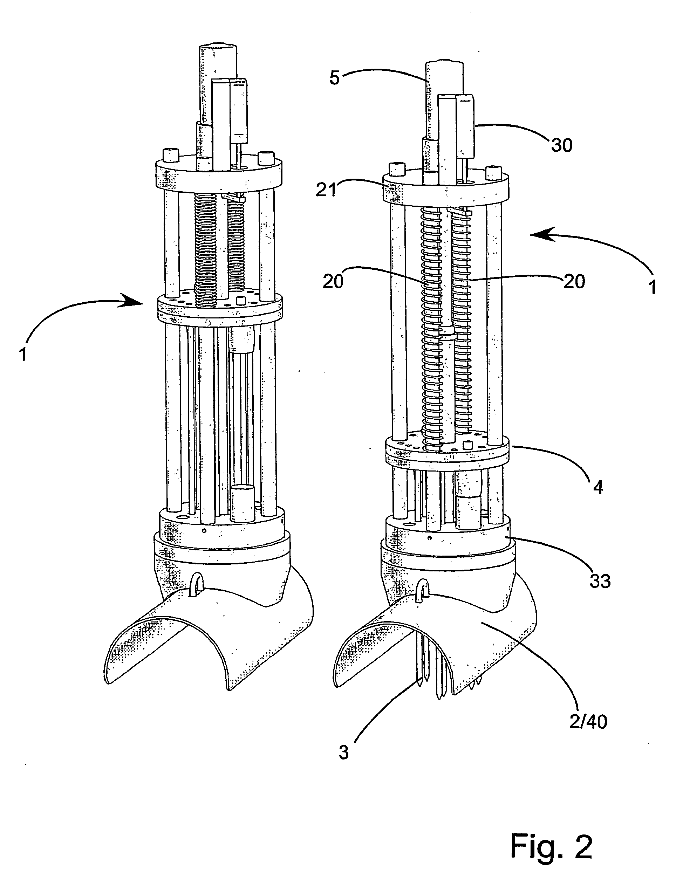

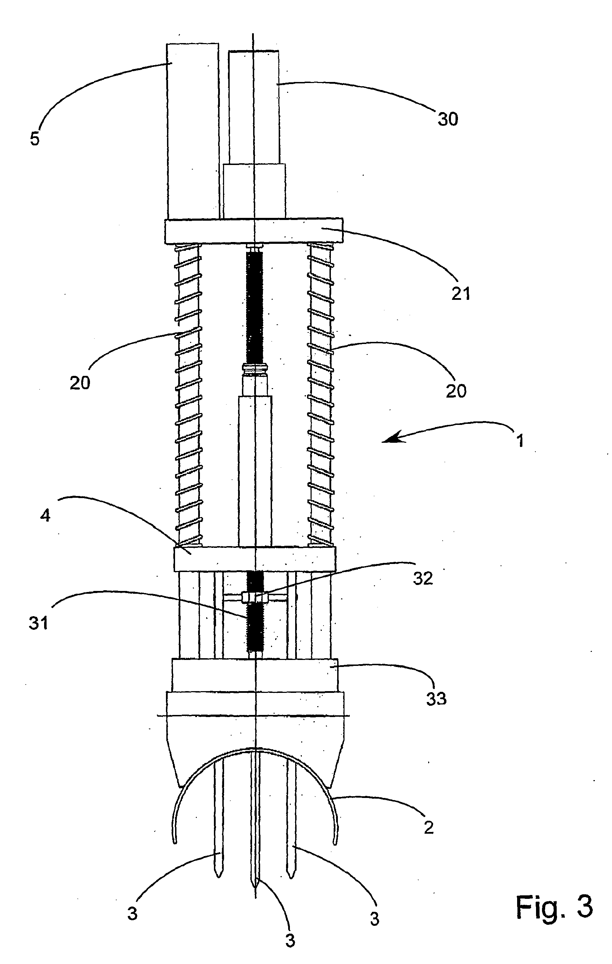

Reference being initially made to Figure 1, an embodiment of the invention will be explained in further detail. The rat trap 1 comprises an automatic mechanism (not shown in Figure 1) which is capable of both firing the spikes 3 and pulling them back in order to thereby release a spiked rat. This mechanism will be described in further detail in the following with reference to Figures 2 and 3.

Figure 2 shows a rat trap 1. The rat trap comprises a plate 2 with a first side and a second side and having a number of through-going opening from the first side to the second side. The rat trap is provided with a number of spikes 3 that are secured to an anchoring plate 4. This anchoring plate is arranged on the first side - being in the depicted Figure the top face - of the plate. The spikes 3 are adapted to the openings in this plate 2 to the effect that the spikes are adapted not only to slide through the plate, rather spikes and openings are also adapted such that the circumference of the spikes corresponds essentially to the circumference of the openings.

The rat trap is automated in that the spikes 3 can both be fired and withdrawn by means of interior automatics. An embodiment of such automatics will be explained in further detail with reference to Figures 2 and 3. To supply energy to this firing and withdrawal mechanism, the rat trap is provided with an energy supply 5, such as eg a power supply in the form of a battery as shown at the top of the drawing. However, the power may also come from other sources, eg the mains system.

In order to detect the presence of an animal within the reach of the spikes, the rat trap is usually provided with an electronic sensor (not shown). This sensor may eg be an infrared sensor or other movement sensor, but of course nothing prevents other sensors from being used. The sensor may even rely entirely on mechanics.

If the sensor is based on infra-red measurement, one would usually arrange the sensor to measure approximately centrally of the face area within which the spikes hit. However the sensor of the detector may also be based on other measurement methods that are capable of detecting the presence of a rat within a zone where the spikes are assumed to be able to kill the rat, be it eg by means of sound or movement, but, as mentioned, the sensor may also rely on mechanics.

The trap may also comprise a light sensor (not shown) being in communication with the firing mechanism such that the firing mechanism is interrupted when light occurs that is above a given intensity. By providing the trap with means for switching off the firing mechanism when a light intensity above a given level occurs, it is possible to prevent accidents due to eg erroneous activation of the trap in case of ordinary localised work illumination, including eg also in daylight at ground level or in artificial work illumination at the bottom of a shaft. Such light-activated safety means may of course also be adapted to be such that they switch off the trap merely if a superposed well cover is opened in daylight.

In the shown trap 1 the firing mechanism is founded on a spring mechanism 20 which is arranged between the anchoring plate 4 and a stop means 21. In the shown mechanism the anchoring plate 4 is thus movable.

Springs 20 are selected to have so much spring power that the spikes 3 are moved at such speed and inertia through the openings in the plate that a rat is killed by the spikes when the firing mechanism is released.

The rat trap 1 is provided with a withdrawal mechanism which, after a given period of time, withdraws the spikes 3 through the openings in the plate 2. Thereby a (dead) rat spiked on the underside of the plate 2 is released, the plate 2 thus serving as stop means.

The firing mechanism and withdrawal mechanism as such are, in the example shown, based on ia an electronic mechanism which is able to control and move the requisite mechanical parts of the trap and the functioning as such will be explained in further detail in the following in the context of Figure 3.

Figure 3 schematically shows an embodiment of a firing and withdrawal mechanism which will be explained in further detail in the following. When the trap 1 is to be used, it is turned on by means of a not shown switch, following which a motor 30 starts to rotate an associated thread spindle 31 to the effect that a nut 32 mounted thereon starts to move upwards (in the Figure). Of course, the nut is journalled in such a manner that it does not rotate with the spindle and, in the embodiment shown of the invention, this is accomplished by means of two arms that prevent a rotation of the nut, while simultaneously they allow an upwardly or downwardly oriented movement of the nut from a lower starting position (such as eg a position which is slightly lower than the position of the nut shown in Figure 1). Since the thread spindle is journalled in an opening (a hole) in the anchoring plate 4 with sufficiently large fit for the anchoring plate 2 to slide effortlessly up and down the spindle without the plate 2 coming into contact with the thread of the spindle, the rotation of the spindle does not in itself influence the anchoring plate, but since, however, the nut (32) is unable to travel through this opening to the thread spindle, the anchoring plate 4 is pulled upwards when the nut hits it.

As the anchoring plate 4 moves upwards, the springs 20 are compressed and the compression goes on until the anchoring plate 4 has assumed a predetermined position, where experience has shown that the springs have absorbed enough energy for them to thrust the spikes out through the plate 2 with so much force that a rat within reach of the spikes is killed.

In this position the anchoring plate is subsequently locked by a (not shown) releasable locking mechanism and, in this position, the electronic control unit of the trap also stops rotation of the spindle.

Now, the control unit starts a counter-rotation of the spindle, which means that only the nut is moved downwards, the anchoring plate still being locked.

The downwards movement of the nut continues unit the nut has again essentially reached its lower starting position, following which the rotation is discontinued.

Now, the trap is ready for firing and when that takes place (due to eg the presence of a rat) the releasable locking mechanism releases the anchoring plate 4 which is then, at great speed, moved downwards until it hits a stop being, in the example shown, in the form of a plate 33.

On their way, the spikes have, with great speed and much force, exited on the other side of the plate 2 and are hence capable of killing a rat within their reach (on the underside of the plate 2). In order to be able to vary the inertia of this system and hence optimise the trap the plate is, according to a particular embodiment, equipped to allow mounting and dismounting of weight element. If the trap is situated in a sewer pipe, the dead rat will eventually be flushed away by the water.

Albeit the trap is shown with a spring mechanism, the withdrawal mechanism may, of course, also be made in other ways. It may be constituted of eg an electromagnetic mechanism, such as eg a solenoid or a coil. By configuring the withdrawal mechanism around a solenoid it is possible to accomplish a very quick mechanism and this is why the same mechanism can also be used for firing the spikes, too. It could also be a pneumatic or a hydraulic mechanism. By configuring the withdrawal mechanism around such air-and/or liquid-based mechanisms, it is also possible to accomplish very quick and reliable mechanisms that can also be used for firing the spikes, too.

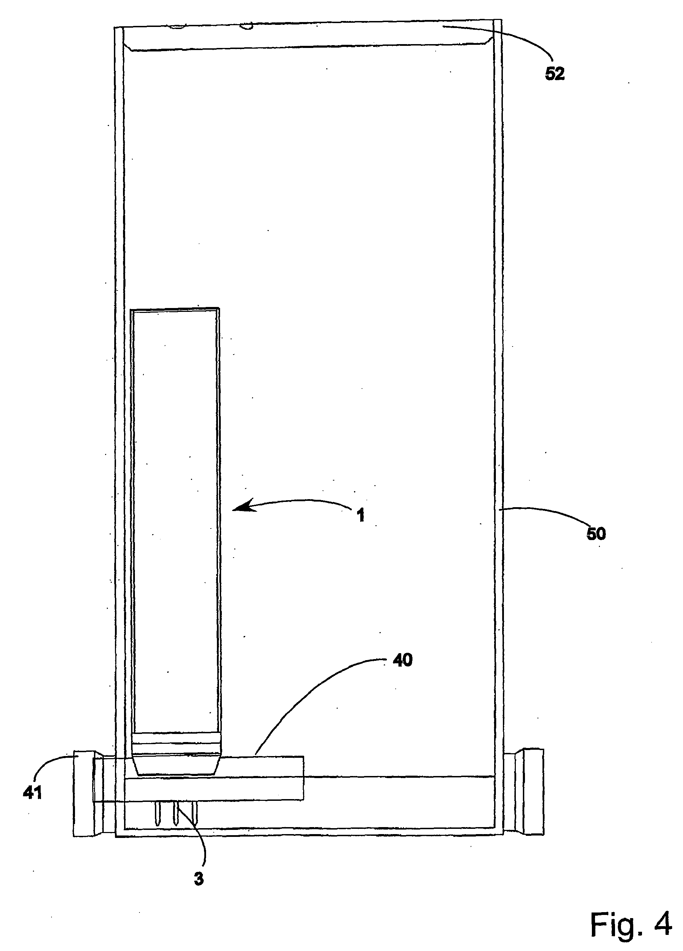

Figure 4 shows a trap 1 which is arranged at the bottom of a sewer shaft 50. The trap 1 is mounted on a mounting member 40 which in the shown embodiment is a flexible semi-cylindrical tubular member 40 that resiliently engages a sewer pipe 41 but the mounting member could also be in form of e.g. semi-cylindrical tubular member being provided with expanding means such that it is capable of engaging the inner side of a pipe. The resilient member 40 may be made out of steel but other materials may be used such as e.g. plastic.

In its unstressed state, the resilient tubular member 40 has an outer radius which slightly exceeds the inner radius of the sewer pipe 41. Thereby the trap is easily fastened therein merely by a trap fitter compressing the tubular member 40 to such suitable extent that the tubular member 40 can be inserted into the sewer pipe 41. Then the fitter inserts the tubular member 40 into the sewer pipe 41 and lets go of it, following which the tubular member 40 resiliently engages the inside of the sewer pipe 41. Even though the member 40 is described as being made out of resilient material other solutions known to the skilled person may be used, such as e.g. mechanically expanding sleeves. For illustrative purposes, the trap is shown with the spikes out, but of course this is usually not the case unless the trap is to be serviced or the like.

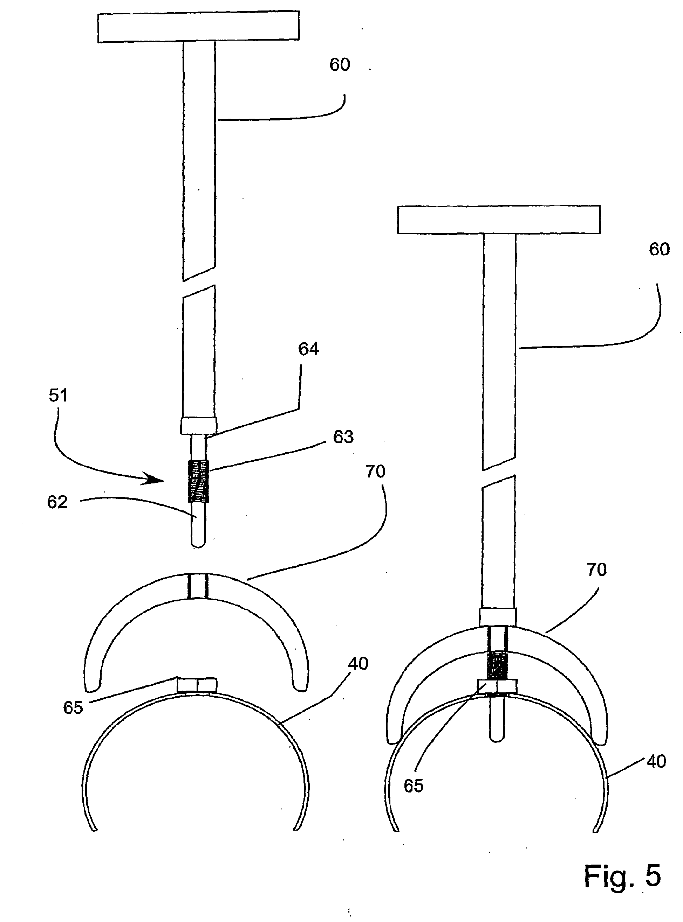

Figure 5 shows a tool for mounting a trap in a sewer shaft and the functionality of it will be explained in further detail in the following. The tool consists of two parts: a handle part 60 and a stop plate 70. Moreover, the figure also shows a resilient tubular member 40. As explained above, the trap will usually be arranged on the tubular member (40), but for the sake of clarity this is not the case in the depiction shown in Figure 5.

The handle part is provided with a mounting pin 61, being in the shown embodiment divided into three pieces 62, 63, 64, where only the middlemost part 63 is provided with thread. The mounting pin is adapted to the stop plate 70 in such a manner that the thread mates with corresponding thread in the stop plate, and the thread-less part of the mounting pin 64 which is situated after the thread 63 is adapted to the thickness of the stop plate to the effect that the mounting pin 62, 63, 64 can be turned so far into the stop plate 70 that the thread 63 on the mounting pin 61 does not engage with the thread of the stop plate. Like the stop plate, the resilient tubular member 40 is provided with a thread mating with the thread on the mounting pin 60. That thread can be constituted (as shown in the Figure) of a nut 65, but of course the thread can be made in a variety of other ways.

When the tool is to be used, one starts out by mounting the stop plate 70 on the mounting pin 61 and subsequently turning it so far that the threads are no longer in engagement. Then one may turn the thread 63 of the mounting pin into the nut on the tubular element 40 and thereby the tubular member 40 is pulled into the convex portion of the stop plate. During this process the tubular member 40 is deformed (compressed). The fitter continues this deformation until the tubular member 40 can be pressed into the sewer pipe where the trap is to be mounted (not shown), following which the fitter deploys the trap simply by turning the mounting pin out of engagement with the tubular member 40.

Even though the stop plate 70 can be secured to the mounting pin in many ways, eg by means of a known split pin system (arranged on the top face of the thread portion 63 or a corresponding place) the embodiment as shown in Figure 5 is associated with the advantage that several sizes of stop plates (different diameters/curvatures) can be mounted on the same mounting pin 61. Thereby the fitter needs only one handle part which can then be used for several different (different diameters/curvatures) stop plates which he selects in response to the size of tubular element 49 (fitted with trap) to be mounted in a sewer.

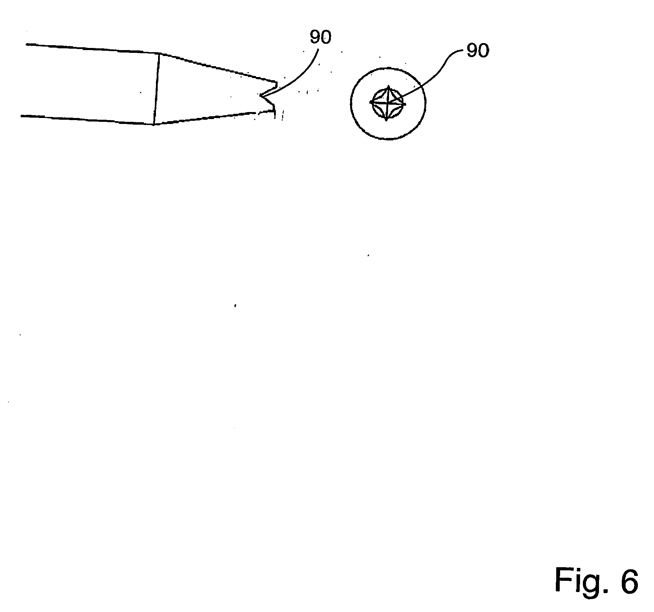

Figure 6 shows a particular kind of spike, where the tips of the spikes are configured with a central indentation 90. The indentation of the tips may advantageously be configured like corresponding indentations in bullets for weapons such as eg described in patent disclosures US6805057 B or DE4435859 A1. However, as opposed to the technique taught in the above referenced patents, the object served by such configuration of the spikes of the rat trap is not that the tips are to deform but rather to maintain their shave when they pass through the rat. The indentation in the spikes thus serves to remove as much tissue as possible and, thus, it has been found that spikes configured with such indentations kill the rats far more quickly than spikes that are merely pointed.

Albeit the trap was explained in a scenario where the trap is mounted in a sewer pipe the trap may, of course, also be used elsewhere. Of course, it can also be used to kill other animals than rats. The electronic sensor as such is, in the above examples, described as a single sensor, but the presence of an animal may, of course, also be detected on the basis of several detections, such as eg detections of movement, light and/or heat. The hitting accuracy of the trap can, of course, also be increased by making the firing depend on one or more detection criteria being complied with prior to the trap being fired (such as eg that both movement and heat must be detected). Electronic/optical sensors for accurate detection of acceleration can also be used for detecting signs of life within the radius of the spikes.

According to one embodiment the rat trap comprises electronic means for transferring images or other parameters to a network, such as eg a mobile telephone network. Thereby the rat trap can be remote-monitored visually via eg the internet, and therefore it is also possible to perform a visual inspection of the surroundings of the trap or the technical functionality of the trap eg by enabling the trap to be remote-fired. Monitoring of the functionality of the trap can, of course, also be performed in other known ways, such as eg electronically.

The trap being a self-emptying device and hence less maintenance-intensive than other traps, the trap may advantageously also be equipped with means for other monitoring tasks. For instance, the trap may be equipped with one or more means for tasks such as monitoring and continuously recording the water level, flow rate, flow, water quality/pollution, PH value or temperature. The trap may be provided with a data storage consisting of eg reference values to the effect that it is able to perform a comparison of measured data there with and, based on this, provide an alarm if a value for one or more of the measured parameters falls outside the allowable reference values. The alarm as such may take place eg by means of sound, light or radio signals, eg through the mobile telephone net. If the trap is used for carrying out monitoring tasks such as eg analyses of the water quality in the well, the results can be stored electronically or be transferred by means of eg wireless technology, but of course the results can also be transferred from the rat trap to a receiver by means of other conventional technique such as eg wires, fibre optics cables or the like.

## Claims

1. A rat trap (1) comprising
• a plate (2) with a first side and a second side and with a number of through-going openings from the first to the second side;
• a number of spikes (3) secured to an anchoring plate (4), said anchoring plate being arranged on the first side of said plate, and wherein each spike is adapted to the individual openings in the plate to the effect that a spike is able to slide through such opening from the first side of the plate to the second side of the plate;
• an energy supply (5);
• a release mechanism;
• a sensor adapted to detect the presence of a rat within the reach of the spikes on the second side of the plate;
• a firing mechanism (20) which is capable of ejecting one or more of these spikes through the openings when the presence of a rat is detected by the sensor,
**characterised in**
**that** the rat trap further comprises a withdrawal mechanism which, following a given period of time, withdraws the spikes through the openings in the plate, whereby the plate serves as stop means and hence releases a rat spiked by one or more spikes, said plate with a first side and a second side and with a number of through-going openings from the first to the second side is constituted of a member (40) adapted to engage a sewer pipe (41).

2. A rat trap according to claim 1, **characterised in that** the rat trap comprises electronic means capable of storing information on number of firings.

3. A rat trap according to claims 1-2, **characterised in that** the withdrawal mechanism withdraws the spikes following a predetermined period of time.

4. A rat trap according to claims 1-3, **characterised in** comprising electronic means for recording and storing information concerning operational parameters such as battery state or available memory.

5. A rat trap according to claims 1-4, **characterised in** comprising electronic means for wireless transfer of operational parameters to a receiver unit at eg ground level.

6. A rat trap according to claims 1-5, **characterised in that** the trap comprises electronic means for transferring operational parameters to a network such as eg a mobile telephone network to the effect that the rat trap can be remote-monitored via eg the internet.

7. A rat trap according to claims 1-6, **characterised in** comprising a light sensor communicating electronically with the firing mechanism to the effect that the firing mechanism is switched off when light above a given intensity occurs.

8. A rat trap according to claims 1-7, **characterised in that** the trap comprises a mounting member for engaging of a sewer pipe

9. A rat trap according to claim 1-8, **characterised in that** the plate with a first side and a second side and with a number of through-going openings from the first to the second side is constituted of a flexible member adapted to resiliently engage a sewer pipe.

10. A rat trap according to claims 9, **characterised in that** the plate is constituted of a semi-cylindrical shield.

11. A rat trap according to claims 1-10, characterised that the withdrawal mechanism is constituted of electromagnetic means such as eg a solenoid or a coil.

12. A rat trap according to claims 1-11, **characterised in that** the withdrawal mechanism is constituted of an electromotor that rotates a spindle (31) adapted to withdraw the spikes.

13. A rat trap according to claims 5-12, **characterised in** comprising electronic means for transferring operational information between the trap and a network such as eg a mobile telephone network to the effect that the rat trap can be remote-operated via eg the internet.

14. A rat trap according to claims 5-13, **characterised in that** the trap comprises a camera for transferring images to a network such as eg a mobile telephone network to the effect that the rat trap can be remote-monitored via eg the internet.

## Patentansprüche

1. Rattenfalle (1), umfassend
• eine Platte (2) mit einer ersten Seite und einer zweiten Seite und mit einer Anzahl von durchgehenden Öffnungen von der ersten zur zweiten Seite;
• eine Anzahl von Stacheln (3), die an einer Verankerungsplatte (4) befestigt sind, wobei die Verankerungsplatte an der ersten Seite der Platte angeordnet ist, og wobei jeder Stachel an den einzelnen Öffnungen in der Platte angepasst ist, so dass ein Stachel durch eine solche Öffnung von der ersten Seite der Platte zur zweiten Seite der Platte gleiten kann;
• eine Energieversorgung (5);
• einen Auslösemechanismus (5);
• einen Sensor, der eingerichtet ist, um die Anwesenheit einer Ratte in Reichweite der Stacheln auf der zweiten Seite der Platte zu erfassen;
• einen Abschussmechanismus (20), der einen oder mehrere der Stacheln durch die Öffnungen ausstoßen kann, wenn die Anwesenheit einer Ratte vom Sensor erfasst wird,
**dadurch gekennzeichnet,**
**dass** die Rattenfalle weiter einen Rückzugsmechanismus umfasst, der nach einem bestimmten Zeitraum die Stacheln durch die Öffnungen in der Platte zurückzieht, wobei die Platte als Anschlagsmittel funktioniert und somit eine von einem oder mehreren Stacheln aufgespießte Ratte freigibt, wobei die Platte mit einer ersten Seite und einer zweiten Seite und mit einer Anzahl von durchgehenden Öffnungen von der ersten zur zweiten Seite aus einem Element (40) besteht, das eingerichtet ist, um mit einem Kanalrohr (41) in Eingriff zu gehen.

2. Rattenfalle nach Anspruch 1, **dadurch gekennzeichnet, dass** die Rattenfalle elektronische Mittel umfasst, die Information über die Anzahl von Abschüssen speichern können.

3. Rattenfalle nach Anspruch 1-2, **dadurch gekennzeichnet, dass** der Rückzugsmechanismus die Stacheln nach einem vorbestimmten Zeitraum zurückzieht.

4. Rattenfalle nach Anspruch 1-3, **dadurch gekennzeichnet, dass** sie elektronische Mittel zum Aufnehmen und Speichern von Information, die Betriebsparameter wie Batteriezustand oder verfügbaren Speicherplatz betrifft, umfasst.

5. Rattenfalle nach Anspruch 1-4, **dadurch gekennzeichnet, dass** sie elektronische Mittel zur drahtlosen Übertragung von Betriebsparametern an eine Empfängereinheit, z.B. in Bodenhöhe, umfasst.

6. Rattenfalle nach Anspruch 1-5, **dadurch gekennzeichnet, dass** die Falle elektronische Mittel zur Übertragung von Betriebsparametern an ein Netzwerk wie z.B. ein Funktelefonnetzwerk umfasst, so dass die Rattenfalle z.B. via das Internet fernüberwacht werden kann.

7. Rattenfalle nach Anspruch 1-6, **dadurch gekennzeichnet, dass** sie einen Lichtsensor umfasst, der elektronisch mit dem Abschussmechanismus kommuniziert, so dass der Abschussmechanismus abgeschaltet wird, wenn Licht über einer bestimmten Intensität auftritt.

8. Rattenfalle nach Anspruch 1-7, **dadurch gekennzeichnet, dass** die Falle ein Befestigungselement zum Eingreifen mit einem Kanalrohr umfasst.

9. Rattenfalle nach Anspruch 1-8, **dadurch gekennzeichnet, dass** die Platte mit einer ersten Seite und einer zweiten Seite und mit einer Anzahl von durchgehenden Öffnungen von der ersten zur zweiten Seite aus einem flexiblen Element besteht, das für den elastischen Eingriff mit einem Kanalrohr eingerichtet ist.

10. Rattenfalle nach Anspruch 9, **dadurch gekennzeichnet, dass** die Platte aus einem halbzylindrischen Schild besteht.

11. Rattenfalle nach Anspruch 1-10, **dadurch gekennzeichnet, dass** der Rückzugsmechanismus aus elektromagnetischen Mitteln wie z.B. einem Elektromagneten oder einer Spule besteht.

12. Rattenfalle nach Anspruch 1-11, **dadurch gekennzeichnet, dass** der Rückzugsmechanismus aus einem Elektromotor besteht, der eine Drehspindel (31) dreht, die eingerichtet ist, um die Stacheln zurückzuziehen.

13. Rattenfalle nach Anspruch 5-12, **dadurch gekennzeichnet, dass** sie elektronische Mittel zur Übertragung von Betriebsinformation zwischen der Falle und einem Netzwerk wie z.B. einem Funktelefonnetzwerk umfasst, so dass die Rattenfalle z.B. via das Internet fernbedient werden kann.

14. Rattenfalle nach Anspruch 5-13, **dadurch gekennzeichnet, dass** die Falle eine Kamera zur Übertragung von Bildern an ein Netzwerk wie z.B. ein Funktelefonnetzwerk umfasst, so dass die Rattenfalle z.B. via das Internet fernüberwacht werden kann.

## Revendications

1. Ratière (1) comprenant
- une plaque (2) avec un premier côté et un deuxième côté et avec un certain nombre d'ouvertures traversantes à partir du premier jusqu'au deuxième côté;
- un certain nombre de pointes (3) fixées sur une plaque d'ancrage (4), ladite plaque d'ancrage étant disposée sur le premier côté de ladite plaque, et chaque pointe étant adaptée aux ouvertures individuelles dans la plaque à l'effet que la pointe est capable de glisser à travers une telle ouverture à partir du premier côté de la plaque jusqu'au deuxième côté de la plaque;
- une source d'énergie (5);
- un mécanisme de libération;
- un capteur adapté pour détecter la présence d'un rat à la portée des pointes sur le deuxième côté de la plaque,
- un mécanisme de mise à feu (20) qui est capable d'éjecter une ou plusieurs de ces pointes à travers les ouvertures lorsque la présence d'un rat est détectée par le capteur,
**caractérisée en ce que** la ratière comprend en outre un mécanisme de retrait qui, après une période de temps donnée, retire les pointes à travers les ouvertures dans la plaque, la plaque servant de moyen d'arrêt et sortant ainsi un rat percé par une ou plus des pointes, ladite plaque avec un premier côté et un deuxième côté et avec un certain nombre d'ouvertures traversantes à partir du premier jusqu'au deuxième côté étant constituée d'un élément (40) adapté pour engager une conduite d'égout (41).

2. Ratière selon la revendication 1, **caractérisée en ce que** la ratière comprend des moyens électroniques aptes à stocker des informations sur le nombre de tirs.

3. Ratière selon les revendications 1 à 2, **caractérisée en ce que** le mécanisme de retrait retire les pointes à la suite d'une période de temps prédéterminée.

4. Ratière selon les revendications 1 à 3, **caractérisée en ce qu'**elle comprend des moyens électroniques pour enregistrer et stocker des informations concernant les paramètres de fonctionnement tels que l'état de la batterie ou la mémoire disponible.

5. Ratière selon les revendications 1 à 4, **caractérisée en ce qu'**elle comprend des moyens électroniques pour le transfert sans fil des paramètres de fonctionnement à une unité de réception, par exemple, au niveau du sol.

6. Ratière selon les revendications 1 à 5, **caractérisée en ce que** la ratière comprend des moyens électroniques pour la transmission de paramètres opérationnels à un réseau, tel que par exemple un réseau de téléphonie mobile à l'effet que la ratière peut être télécommandée, par exemple par l'Internet.

7. Ratière selon les revendications 1 à 6, **caractérisée en ce qu'**elle comprend un capteur de lumière communiquant électroniquement avec le mécanisme de mise à feu à l'effet que le mécanisme de mise à feu est éteint lorsque la lumière au-dessus d'une intensité donnée se produit.

8. Ratière selon les revendications 1 à 7, **caractérisée en ce que** la ratière comprend un élément de montage pour venir en prise avec une conduite d'égout.

9. Ratière selon les revendications 1 à 8, **caractérisée en ce que** la plaque avec un premier côté et un deuxième côté et avec un certain nombre d'ouvertures traversantes à partir du premier jusqu'au deuxième côté est constituée d'un élément flexible adapté pour venir en prise élastique avec une conduite d'égout.

10. Ratière selon la revendication 9, **caractérisée en ce que** la plaque est constituée d'un écran semi-cylindrique.

11. Ratière selon les revendications 1 à 10, **caractérisée en ce que** le mécanisme de retrait est constitué de moyens électromagnétiques tels que par exemple un solénoïde ou une bobine.

12. Ratière selon les revendications 1 à 11, **caractérisée en ce que** le mécanisme de retrait est constitué d'un moteur électrique qui fait tourner une broche (31) adaptée pour retirer les pointes.

13. Ratière selon les revendications 5 à 12, **caractérisée en ce qu'**elle comprend des moyens électroniques destinés à transférer les informations opérationnelles entre la ratière et un réseau tel que par exemple un réseau de téléphonie mobile à l'effet que la ratière peut être télécommandée, par exemple par l'Internet.

14. Ratière selon les revendications 5 à 13, **caractérisée en ce que** la ratière comprend un appareil photographique destiné à transférer des images à un réseau, tel que par exemple un réseau de téléphonie mobile à l'effet que la ratière peut être télécommandée, par exemple par l'Internet.
